# FASCICULE DE BREVET EUROPEEN

(11) **EP 3 900 431 B1**
(45) Date de publication et mention de la délivrance du brevet: **11.09.2024**
(21) Numéro de dépôt: 19839362.1
(22) Date de dépôt: 04.12.2019
(51) Int. Cl.: H04W 88/08, H04B 10/00

(54) **PROCÉDÉ DE GESTION DE RESSOURCES D'UN RÉSEAU DE TÉLÉCOMMUNICATIONS CONVERGENT ACCÈS-FIXE ET RADIO-MOBILE, PRODUIT PROGRAMME D'ORDINATEUR ET DISPOSITIFS CORRESPONDANTS**
VERFAHREN ZUR VERWALTUNG VON RESSOURCEN EINES KONVERGENTEN MOBILFUNK- UND FESTZUGRIFFSTELEKOMMUNIKATIONSNETZES SOWIE ENTSPRECHENDES COMPUTERPROGRAMMPRODUKT UND VORRICHTUNGEN
METHOD FOR MANAGING RESOURCES OF A MOBILE RADIO AND FIXED ACCESS CONVERGENT TELECOMMUNICATIONS NETWORK, AND CORRESPONDING COMPUTER PROGRAM PRODUCT AND DEVICES

(30) Priorité: 20.12.2018 FR 1873463
(43) Date de publication de la demande: 27.10.2021
(73) Titulaire: Orange, 92130 Issy-les-Moulineaux (FR)
(72) Inventeur: RADIER, Benoît, 92326 CHÂTILLON CEDEX (FR); FRIGUI, Nejm Eddine, 92326 CHÂTILLON CEDEX (FR); QUINTUNA RODRIGUEZ, Veronica Karina, 92326 CHÂTILLON CEDEX (FR)
(74) Mandataire: Vidon Brevets & Stratégie
(86) Numéro de dépôt international: PCT/FR2019/052922
(87) Numéro de publication internationale: WO 2020/128202

(56) Documents cités:
- LOUMIOTIS IOANNIS ET AL: "Dynamic Allocation of Backhaul Resources in Converged Wireless-Optical Networks", IEEE JOURNAL ON SELECTED AREAS IN COMMUNICATIONS, IEEE SERVICE CENTER, PISCATAWAY, US, vol. 35, no. 2, 1 February 2017 (2017-02-01), pages 280 - 287, XP011644590, ISSN: 0733-8716, [retrieved on 20170331], DOI: 10.1109/JSAC.2017.2659023
- MASATOSHI SUZUKI ET AL: "Optical networking technologies for fixed and mobile convergence", OPTOEELECTRONICS AND COMMUNICATIONS CONFERENCE (OECC), 2010 15TH, IEEE, PISCATAWAY, NJ, USA, 5 July 2010 (2010-07-05), pages 420 - 421, XP031765398, ISBN: 978-1-4244-6785-3

## Description

### Domaine de l'invention

Le domaine de l'invention est celui de la mise en oeuvre des réseaux de télécommunications convergents accès-fixe et radio-mobile. L'invention se rapporte plus particulièrement à la gestion des ressources (e.g. ressources optiques, ressources radio, ressources virtualisées, etc.) dans de tels réseaux de télécommunications.

L'invention a de nombreuses applications, notamment, mais non exclusivement, dans le domaine des réseaux de télécommunications conformes aux normes 3GPP (de l'anglais « 3rd Génération Partnership Project ») de dernières générations ou de générations futures.

### Art antérieur et ses inconvénients

Les réseaux dits accès-fixe et les réseaux radio-mobiles actuels sont gérés de manière indépendante.

Plus particulièrement, la partie frontale (e.g. la boucle locale jusqu'à l'utilisateur final) de certains réseaux accès-fixe connus s'appuie déjà largement sur l'usage de ressources optiques.

Par ailleurs, les réseaux radio-mobiles de génération future visent à centraliser et virtualiser les traitements effectués en bande de base dans des unités centrales, ou CU (de l'anglais « Central Units »), déportés en amont dans le réseau. Les signaux radio traités sont ensuite transmis aux éléments radio distribués, ou DU (de l'anglais « Distributed Units »), par exemple les stations de base, via des fibres optiques. La capacité des fibres optiques requise entre les CU et les DU (également appelée capacité de transport frontale) doit être garantie par le réseau optique mis en oeuvre.

Dans le contexte de réseaux de télécommunications convergents accès-fixe et radio-mobiles, les infrastructures optiques dite « fibre jusqu'à la maison », ou FTTH (de l'anglais « Fibre-To-The-Home ») représentent une alternative intéressante pouvant être utilisée en tant qu'infrastructure partagée pour le déploiement de la partie frontale (e.g. la partie du réseau en charge de l'acheminement des données jusqu'aux stations de base pour la partie radio-mobile et la boucle locale pour la partie accès-fixe et) à la fois des parties accès-fixe et radio-mobile de tels réseaux convergents.

En effet, les infrastructures FTTH représentent actuellement l'infrastructure de réseau d'accès-fixe la plus fiable. Les réseaux optiques passifs, ou PON (de l'anglais « Passive Optical Network »), représentent l'une des solutions de réseau d'accès FTTH les plus attrayantes. En effet, les réseaux PON sont largement déployés depuis plusieurs années grâce à leur capacité à offrir des services haut débit et à satisfaire les besoins de la majorité des clients en termes de qualité de service, ou QoS (de l'anglais « Quality of Service »). Les réseaux PON actuels reposent sur ce que l'on appelle un mécanisme « d'allocation dynamique de la bande passante », ou DBA (de l'anglais « Dynamic Bandwidth Allocation »), qui est mis en oeuvre dans les routeurs optiques afin d'affecter à un modem optique donné, la bande passante dont il a besoin pour servir un utilisateur final tout en tenant compte de l'état du trafic et des besoins des autres modems optiques. La bande passante allouée à chaque utilisateur final est contrôlée par le routeur optique correspondant en fonction du profil de l'utilisateur (tel que défini par exemple dans le document de normalisation UIT-T G.984.3).

Cependant, l'allocation de ressources dans une architecture FTTH appliquée à un réseau radio-mobile doit pouvoir prendre en compte les spécificités du réseau radio-mobile en question. Par exemple, la capacité allouée aux ressources optiques mises en oeuvre dans un tel réseau radio-mobile doit permettre de préserver la QoS des utilisateurs mobiles. La capacité requise dépend de la configuration de la station de base considérée. Par exemple, les stations de base de quatrième génération, ou 4G au sens du 3GPP, peuvent être configurées manuellement pour fonctionner avec une bande passante radio de 1,4 MHz, 3 MHz, 5 MHz, 10 MHz, 15 MHz ou 20 MHz. Les ressources radio disponibles, à savoir les blocs de ressources, ou RB (de l'anglais « Ressource Blocs »), sont allouées entre les différents utilisateurs mobiles connectés à la station de base en question. Par exemple, une station de base configurée pour fonctionner avec une bande passante de 20 MHz dispose de 100 RB à allouer aux différents utilisateurs mobiles alors qu'une station de base configurée pour fonctionner avec une bande passante radio de 10 MHz dispose de 50 RB à allouer. Ces configurations représentent les différents profils radio utilisateurs gérés par le réseau.

Par ailleurs, dans le cas d'un réseau radio-mobile de génération future dans lequel certaines fonctions sont virtualisées dans le réseau, la capacité de transport du réseau dépend de la répartition fonctionnelle entre les CUs et les DUs. Par exemple, en considérant la virtualisation de la fonction de codage de canal au sein d'une CU (option 7.3 du document de standardisation 3GPP TS 38.801), la capacité de transport frontale requise pour des stations de base ayant une bande passante radio de 20 MHz, 10 MHz et 5 MHz est respectivement de 100 Mbps, 50 Mbps et 25 Mbps. Ces capacités de transport frontale requises pour le transport des données entre les CUs et les DUs doivent ainsi être garanties afin de permettre au réseau radio-mobile d'offrir les performances attendues pour les profils radio utilisateurs correspondants. Dans le document d'art antérieur Loumiotis loannis et AL, "Dynamic Allocation of Backhaul Resources in Converged Wireless-Optical Networks" les stations de base du réseau PON estiment elles-mêmes leurs propres besoins en ressources.

Compte tenu des spécificités précitées des réseaux FTTH, leur paramétrage selon les techniques actuelles peut conduire à une allocation inefficace (e.g. non optimisée) de la bande passante des ressources optiques allouées à la partie radio-mobile d'un réseau convergent accès-fixe et radio-mobile.

Il existe ainsi un besoin pour une technique améliorée de gestion des ressources optiques dans un réseau de télécommunications convergent accès-fixe et radio-mobile.

Il existe également un besoin pour que la technique en question gère les autres ressources (e.g. virtualisées, radio, etc.) du réseau de manière cohérente avec les ressources optiques.

### Exposé de l'invention

Dans un mode de réalisation de l'invention, il est proposé un procédé de gestion de ressources d'un réseau de télécommunications convergent accès-fixe et radio-mobile. Au moins une partie des ressources est implémentées sous une forme virtualisée et déportée dans le réseau. Des ressources optiques du réseau sont allouées entre au moins un routeur optique et une pluralité de modems optiques du réseau. Selon un tel procédé, un module de gestion centralisée des ressources radio-mobiles du réseau effectue :
- une réception d'au moins un indicateur de performances de la partie radio-mobile du réseau, dit indicateur performances radio-mobile, transmis par au moins une station de base (100du) du réseau connectée à un des modems optiques et/ou par un module de fonctions radio virtualisées (100vran) déportées dans le réseau et dédiées à la partie radio-mobile du réseau ;
- une estimation de besoins en ressources optiques de la partie radio-mobile du réseau à partir au moins dudit au moins un indicateur performances radio-mobile délivrant une information représentative des besoins en ressources optiques, dite information besoins optiques radio-mobile ; et
- une transmission de l'information besoins optiques radio-mobile à un module de gestion centralisé des ressources optiques et accès-fixes du réseau pour gestion des ressources optiques du réseau.

Ainsi, l'invention propose une solution nouvelle et inventive pour gérer les ressources optiques utilisées à la fois pour faire transiter les données de la partie accès-fixe et de la partie radio-mobile du réseau de télécommunication, au moins dans la partie frontale correspondant à la desserte locale du réseau (boucle locale pour la partie accès-fixe et données destinées aux stations de base pour la partie radio-mobile).

Plus particulièrement, selon la méthode proposée, le module (logiciel ou matériel) de gestion centralisée des ressources radio-mobiles du réseau (i.e. des ressources dédiées au fonctionnement de la partie radio-mobile du réseau) décide des ressources optiques nécessaires au transfert de données sur la partie radio-mobile du réseau afin d'optimiser les performances de la partie radio-mobile du réseau. Ainsi, les ressources optiques sont par exemple adaptées aux besoins en débit du profil radio mis en oeuvre (e.g. adaptées au nombre de ressources radio affectées à une station de base donnée).

Selon un mode de réalisation, le module de gestion centralisée des ressources radio-mobiles effectue en outre :
- une estimation de besoins en ressources virtualisées de la partie radio-mobile du réseau à partir au moins dudit au moins un indicateur performances radio-mobile délivrant une information représentative des besoins en ressources virtualisées, dite information besoins virtualisés radio-mobile ; et
- une transmission de l'information besoins virtualisés radio-mobile à un module de gestion centralisée des ressources virtualisées déportées dans le réseau, pour gestion des ressources virtualisées du réseau.

Ainsi, le module de gestion centralisée des ressources radio-mobiles du réseau décide des ressources déportées dans le réseau qui sont nécessaires à la mise en oeuvre des fonctions associées sur la partie radio-mobile du réseau afin d'optimiser les performances de la partie radio-mobile du réseau (e.g. l'information besoins virtualisés radio-mobile correspond à un besoin en capacité de calcul, en capacité de stockage ou en capacité de mémoire vive). Ainsi, les ressources virtualisées sont par exemple adaptées aux besoins en débit du profil radio mis en oeuvre (e.g. au nombre de ressources radio affectées à une station de base donnée).

Selon un mode de réalisation, le module de gestion centralisée de ressources radio-mobiles effectue en outre :
- une estimation de besoins en ressources radio de la partie radio-mobile du réseau à partir au moins de l'information performances radio-mobile délivrant une information représentative des besoins en ressources radio, dite information besoins radio ; et
- une transmission de l'information besoins radio à ladite au moins une station de base du réseau et/ou au module de fonctions radio virtualisées déportées dans le réseau et dédiées à la partie radio-mobile du réseau, pour gestion des ressources radio du réseau.

Ainsi, le module de gestion centralisée des ressources radio-mobiles du réseau décide également des ressources radio, i.e. du profil utilisateur radio, afin d'optimiser les performances de la partie radio-mobile du réseau (e.g. l'information besoins radio correspond à un nombre de ressources radio devant être allouées à une station de base donnée).

Selon un mode de réalisation, ledit au moins un indicateur performances radio-mobile appartient au groupe comprenant :
- un taux d'utilisation des ressources radio sur l'interface air de la partie radio-mobile du réseau ;
- un nombre de ressources radio effectivement utilisées parmi les ressources radio affectées à une station de base donnée ; et
- un nombre de ressources virtualisées affectées à une station de base donnée dans le module de fonctions radio virtualisées.

Par exemple, la partie radio-mobile du réseau multiplexe les données dans des blocs de ressource distribués en temps et en fréquence (e.g. la partie radio-mobile du réseau implémente un protocole 5G selon le 3GPP). Dans ce cas, les ressources radio sont par exemple des blocs de ressources.

Dans un mode de réalisation de l'invention, la pluralité de modems optiques comprend :
- au moins un modem optique dit accès-fixe, au moins un équipement utilisateur fixe étant connecté à une partie accès-fixe du réseau via le modem optique accès-fixe ; et
- au moins un modem optique dit radio-mobile, au moins une station de base étant connectée à une partie radio-mobile du réseau via ledit au moins un modem optique radio-mobile.

Il est ainsi proposé qu'un module de gestion centralisée des ressources optiques et accès-fixe du réseau effectue les étapes suivantes du procédé de gestion :
- une réception d'au moins un indicateur de performances de la partie accès-fixe du réseau, dit indicateur performances accès-fixe, transmis par au moins un module appartenant au groupe comprenant :
   - ledit au moins un routeur optique ;
   - ledit au moins un modem optique accès-fixe ;
   - ledit au moins un modem optique radio-mobile ; et
   - au moins un module de fonctions équipement fixe virtualisées,
- une réception d'une information représentative de besoins en ressources optiques de la partie mobile du réseau, dite information besoins optiques radio-mobile, transmise par un module de gestion centralisée des ressources radio-mobiles du réseau ;
- une réallocation des ressources optiques entre, d'une part, ledit au moins un routeur optique et ledit au moins un modem optique accès-fixe et, d'autre part, ledit au moins un routeur optique et ledit au moins un modem optique radio-mobile en fonction dudit au moins un indicateur performances accès-fixe et de l'information besoins optiques radio-mobile, délivrant au moins une information représentative de la réallocation de ressources optiques, dite information de réallocation accès-fixe et radio-mobile.

Ainsi, le module de gestion centralisée des ressources optiques et accès-fixe du réseau (i.e. des ressources optiques dédiées à la fois au fonctionnement des parties radio-mobile et accès-fixe du réseau et des autres ressources, dites accès-fixe, dédiées au fonctionnement de la partie accès-fixe du réseau) optimise conjointement les ressources optiques dédiées à la partie accès-fixe et à la partie radio-mobile afin d'optimiser les performances du réseau. Par exemple, le module de gestion centralisée des ressources optiques et accès-fixe tient compte du fait que certaines performances des utilisateurs mobiles doivent être garanties alors que les utilisateurs fixes sont servis au mieux.

Selon un mode de réalisation, le module de gestion centralisée des ressources optiques et accès-fixe effectue en outre :
- une transmission de ladite au moins une information de réallocation accès-fixe et radio-mobile audit au moins un routeur optique pour réallocation des ressources optiques entre, d'une part, ledit au moins un routeur optique et ledit au moins un modem optique accès-fixe et, d'autre part, ledit au moins un routeur optique et ledit au moins un modem optique mobile.

Selon un mode de réalisation, le module de gestion centralisée des ressources optiques et accès-fixe effectue en outre :
- une estimation de besoins en ressources virtualisées de la partie accès-fixe du réseau à partir au moins dudit au moins un indicateur performances accès-fixe, délivrant une information représentative des besoins en ressources virtualisées, dite information besoins virtualisés accès-fixe ; et
- une transmission de l'information besoins virtualisés accès-fixe à un module de gestion centralisée des ressources virtualisées déportées dans le réseau, pour gestion des ressources virtualisées du réseau.

Ainsi, le module de gestion centralisée des ressources optiques et fixes du réseau décide des ressources virtualisées déportées dans le réseau nécessaires à la mise en oeuvre des fonctions associées sur la partie accès-fixe du réseau afin d'optimiser les performances correspondantes (e.g. l'information besoins virtualisés accès-fixe correspond à un besoin en capacité de calcul, en capacité de stockage ou en capacité de mémoire vive).

Dans un mode de réalisation de l'invention, il est proposé qu'un module de gestion centralisée des ressources virtualisées déportées dans le réseau effectue les étapes suivantes du procédé de gestion :
- une réception d'une information représentative de besoins en ressources virtualisées de la partie radio-mobile du réseau, dite information besoins virtualisés radio-mobile, transmise par un module de gestion centralisée des ressources radio-mobiles du réseau ;
- une réception d'une information représentative de besoins en ressources virtualisées de la partie accès-fixe du réseau, dite information besoins virtualisés accès-fixe, transmise par un module de gestion centralisée des ressources optiques et accès-fixe du réseau ; et
- une réallocation des ressources virtualisées en fonction de l'information besoins virtualisés radio-mobile et de l'information besoins virtualisés accès-fixe.

Ainsi, le module de gestion centralisée des ressources virtualisées du réseau affecte des ressources (e.g. une capacité de calcul, une capacité de stockage ou une capacité de mémoire vive) dédiées soit à la partie accès-fixe, soit à la partie radio-mobile, afin d'implémenter les fonctions virtualisées requises par les parties en question.

Selon un mode de réalisation, les étapes précitées du procédé sont effectuées périodiquement.

Selon un mode de réalisation, les ressources optiques sont implémentées selon une infrastructure dite « Fibre jusqu'à la maison ».

L'invention concerne également un programme d'ordinateur comprenant des instructions de code de programme pour la mise en oeuvre du procédé tel que décrit précédemment, selon l'un quelconque de ses différents modes de réalisation, lorsqu'il est exécuté sur un ordinateur.

Dans un mode de réalisation de l'invention, il est proposé un dispositif de gestion centralisée des ressources radio-mobiles d'un réseau de télécommunications convergent accès-fixe et radio-mobile. Un tel dispositif de gestion comprend une machine de calcul reprogrammable ou une machine de calcul dédiée configurée pour mettre en oeuvre les étapes du procédé de gestion selon l'invention telle qu'effectuées par le module de gestion centralisée des ressources radio-mobiles du réseau (selon l'un quelconque des différents modes de réalisation précités).

Ainsi, les caractéristiques et avantages de ce dispositif sont les mêmes que ceux des étapes correspondantes du procédé de gestion décrit précédemment. Par conséquent, ils ne sont pas détaillés plus amplement.

Dans un mode de réalisation de l'invention, il est proposé un dispositif de gestion centralisée des ressources optiques et accès-fixe d'un réseau de télécommunications convergent accès-fixe et radio-mobile. Un tel dispositif de gestion comprend une machine de calcul reprogrammable ou une machine de calcul dédiée configurée pour mettre en oeuvre les étapes du procédé de gestion selon l'invention telle qu'effectuées par le module de gestion centralisée des ressources optiques et accès-fixe du réseau (selon l'un quelconque des différents modes de réalisation précités).

Ainsi, les caractéristiques et avantages de ce dispositif sont les mêmes que ceux des étapes correspondantes du procédé de gestion décrit précédemment. Par conséquent, ils ne sont pas détaillés plus amplement.

Dans un mode de réalisation de l'invention, il est proposé un dispositif de gestion centralisée des ressources virtualisées déportées dans un réseau de télécommunications convergent accès-fixe et radio-mobile. Un tel dispositif de gestion comprend une machine de calcul reprogrammable ou une machine de calcul dédiée configurée pour mettre en oeuvre les étapes du procédé de gestion selon l'invention telle qu'effectuées par le module de gestion centralisée des ressources virtualisées déportées dans le réseau (selon l'un quelconque des différents modes de réalisation précités).

Ainsi, les caractéristiques et avantages de ce dispositif sont les mêmes que ceux des étapes correspondantes du procédé de gestion décrit précédemment. Par conséquent, ils ne sont pas détaillés plus amplement.

Dans un mode de réalisation de l'invention, il est proposé un noeud de réseau de télécommunications convergent accès-fixe et radio-mobile. Un tel noeud de réseau comprend au moins un dispositif parmi les dispositifs précités (selon l'un quelconque des différents modes de réalisation précités), i.e. dispositif de gestion centralisée des ressources radio-mobiles d'un réseau, dispositif de gestion centralisée des ressources optiques et accès-fixe du réseau et dispositif de gestion centralisée des ressources virtualisées déportées dans le réseau.

### Liste des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
- la **figure 1** représente l'architecture d'un réseau de télécommunications convergent accès-fixe et radio-mobile dont les ressources sont gérées par un procédé de gestion selon un mode de réalisation de l'invention ;
- la **figure 2** représente les étapes d'un procédé de gestion des ressources du réseau de la [fig. 1] selon un mode de réalisation de l'invention ; et
- la **figure 3** représente un exemple de structure de dispositif permettant la mise en oeuvre des étapes du procédé de la [fig. 2] selon un mode de réalisation de l'invention.

### Description détaillée de modes de réalisation de l'invention

Le principe général de l'invention repose sur la collecte d'indicateurs de performances de la partie accès-fixe ainsi que de la partie radio-mobile d'un réseau de télécommunications convergent accès-fixe et radio-mobile afin d'estimer et d'allouer de manière optimisée les ressources optiques et/ou les autres ressources (e.g. radio, virtualisées, etc.) du réseau entre les parties radio-mobile et accès-fixe en question.

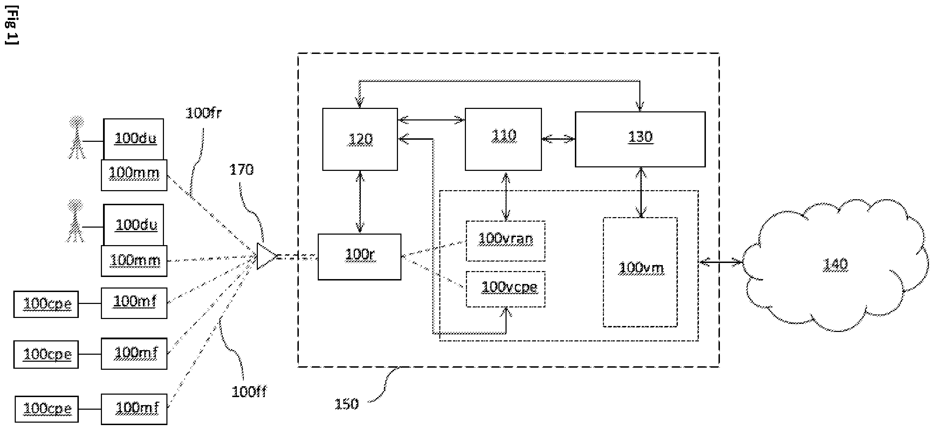

On présente désormais, en relation avec la **figure 1****,** l'architecture d'un réseau de télécommunications convergent accès-fixe et radio-mobile dont les ressources sont gérées par un procédé de gestion selon un mode de réalisation de l'invention.

Dans le réseau en question, un noeud 150 du réseau convergent accès-fixe et radio-mobile est connecté, en amont, au coeur 140 de réseau proprement dit et, en aval, à une pluralité de modems optiques du réseau. La pluralité de modems optiques comprend :
- des modems optiques dit accès-fixe 100mf, au moins un équipement utilisateur 100cpe fixe étant connecté à la partie accès-fixe du réseau via un modem optique accès-fixe 100mf correspondant ; et
- des modems optiques dit radio-mobile 100mm, au moins une station de base 100du étant connectée à la partie radio-mobile du réseau via un modem optique radio-mobile 100mm correspondant.

Plus particulièrement, la pluralité de modems optiques 100mf, 100mm est connectée à un routeur optique 100r du noeud 150 via des ressources optiques, ici des fibres optiques 100fr, 100ff transitant par un multiplexeur 170. Les modems optiques accès-fixe 100mf sont connectés au routeur optique 100r par des fibres optiques 100ff correspondantes et les modems optiques radio-mobiles 100mm sont connectés au routeur optique 100r par des fibres optiques 100fr correspondantes (e.g. selon une infrastructure du type FTTH).

Dans d'autres modes de réalisation, il peut n'y avoir qu'un seul modem optique accès-fixe 100mf et/ou un seul modem optique radio-mobile 100mm connecté au routeur optique 100r.

De retour à la figure 1, le module 120 est un module de gestion centralisée à la fois :
- des ressources optiques dédiées à la fois au fonctionnement de la partie radio-mobile et de la partie accès-fixe du réseau ; et
- des autres ressources, dites accès-fixe, dédiées plus spécifiquement au fonctionnement de la partie accès-fixe du réseau.

Dans la présente demande, le module 120 est aussi dénommé « module de gestion centralisée des ressources optiques et accès-fixe ». Par ailleurs, on notera que le terme module peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en oeuvre une fonction ou un ensemble de fonctions telles que décrites pour les modules concernés. De la même manière, un composant matériel correspond à tout élément d'un ensemble matériel (ou hardware) apte à mettre en oeuvre une fonction ou un ensemble de fonctions pour le module concerné (circuit intégré, carte à puce, carte à mémoire, etc.).

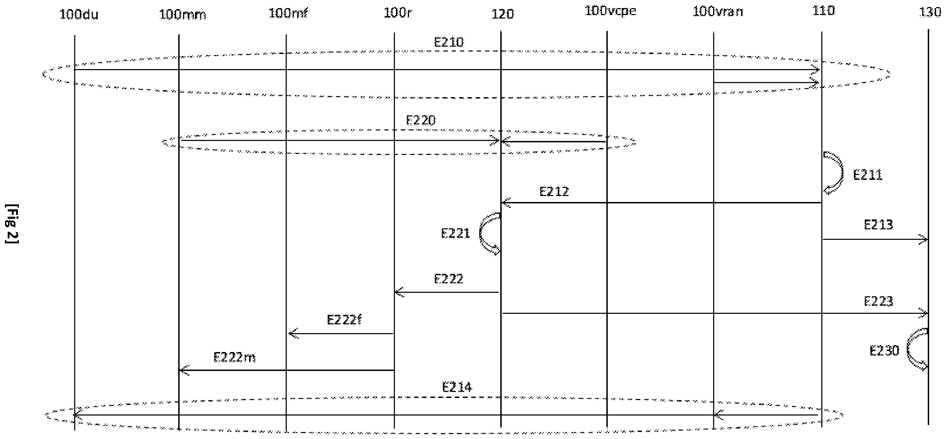

Comme décrit ci-dessous en relation avec la figure 2, le module 120 gère de manière centralisée, entre autres, les ressources optiques du réseau sur la base, d'une part, d'au moins un indicateur de performances de la partie accès-fixe du réseau, dit « indicateur performances accès-fixe » et, d'autre part, d'au moins une information représentative de besoins en ressources optiques de la partie mobile du réseau, dite « information besoins optiques radio-mobile ».

Le ou les indicateur(s) performances accès-fixe est transmis notamment par le routeur optique 100r et/ou tout ou partie des modems optiques 100mm, 100mf via le routeur optique 100r, et/ou par le module 100vcpe de fonctions virtualisées déportées dans le réseau et dédiées à un équipement utilisateur fixe 100cpe correspondant. Dans la présente demande, le module 100vcpe est aussi dénommé « module de fonctions équipement fixe virtualisées ».

Par ailleurs, l'information besoins optiques radio-mobile est déterminée, puis transmise au module 120, par le module 110. Le module 110 détermine l'information besoins optiques radio-mobile à partir d'au moins un indicateur de performances, dit « indicateur performances radio-mobile », transmis par tout ou partie des stations de base 100du et/ou par le module 100vran de fonctions radio virtualisées déportées dans le réseau et dédiées à la partie radio-mobile du réseau. Par exemple, le module 100vran correspond à un élément radio centralisé CU au sens du 3GPP. Dans d'autres modes de réalisation, plusieurs modules 100vran de fonctions radio virtualisées déportées dans le réseau sont instanciés et le module 110 détermine l'information besoins optiques radio-mobile à partir d'indicateurs de performances transmis par tout ou partie des modules 100vran correspondants.

De retour à la figure 1, le module 110 est un module de gestion centralisée des ressources dédiées au fonctionnement de la partie radio-mobile du réseau. Dans la présente demande, le module 110 est aussi dénommé « module de gestion centralisée des ressources radio-mobiles ». A titre d'exemple illustratif, le module 110 pourrait s'apparenter au C-SON (de l'anglais « Centralized- Self Organizing Networks ») tel que défini au sein du 3GPP, mais ici avec de nouvelles fonctionnalités permettant la gestion des ressources du réseau selon la technique décrite.

Comme décrit ci-dessous en relation avec la [fig. 2], le module 120 peut également estimer une information représentative de besoins en ressources virtualisées de la partie accès-fixe du réseau, dite « information besoins virtualisés accès-fixe », sur la base des indicateurs précités de performances de la partie accès-fixe du réseau. Le module 120 transmet dans ce cas au module 130 cette information besoins virtualisés accès-fixe qu'il aura estimé. Dans d'autres modes de réalisation, plusieurs modules 100vcpe de fonctions équipement fixe virtualisées sont instanciés (e.g. en fonction du nombre d'équipements utilisateurs 100cpe fixes connectés) et le module 120 détermine alors l'information besoins virtualisés accès-fixe à partir d'indicateurs de performances transmis par tout ou partie des modules 100vcpe correspondants.

De retour à la figure 1, sur la base des indicateurs précités de performances de la partie radio-mobile du réseau, le module 110 peut également estimer et transmettre au module 130 une information représentative de besoins en ressources virtualisées de la partie radio-mobile du réseau, dite « information besoins virtualisés radio-mobile ».

Dans ce cas, le module 130 de gestion centralisée des ressources virtualisées déportées dans le réseau gère de manière centralisée les ressources virtualisées 100vm (en termes de ressources matérielles, e.g. capacité de calcul, capacité de stockage, capacité de mémoire vive, etc.) du réseau sur la base, d'une part, de l'information besoins virtualisés radio-mobile et, d'autre part, de l'information besoins virtualisés accès-fixes. Les ressources virtualisées 100vm sont ainsi réallouées sur la base des informations en question aux fonctions virtualisées dédiées, d'une part, à la partie radio-mobile du réseau (e.g. le module 100vRAN) et, d'autre part, à la partie accès-fixe du réseau (e.g. le module 100vcpe de fonctions équipement fixe virtualisées).

De même, sur la base des indicateurs précités de performances de la partie radio-mobile du réseau, le module 110 peut également estimer et transmettre aux stations de base 100du, ou au module 100vran de fonctions radio virtualisées déportées dans le réseau, une information représentative des besoins en ressources radio de la partie radio-mobile du réseau, dite information besoins radio. Par exemple, l'information en question correspond à un nombre de ressources radio devant être allouées à une station de base donnée.

On présente désormais, en relation avec la **figure 2**, les étapes d'un procédé de gestion des ressources du réseau de la figure 1 selon un mode de réalisation de l'invention.

On présente tout d'abord les étapes du procédé de gestion mises en oeuvre par le module 110 de gestion centralisée des ressources radio-mobiles.

Lors d'une étape E210, le module 110 reçoit le ou les indicateur(s) performances radio-mobile transmis par les stations de base 100du ainsi que par le module 100vran.

Par exemple, un tel indicateur performances radio-mobile appartient au groupe comprenant :
- un taux d'utilisation des ressources radio sur l'interface air de la partie radio-mobile du réseau (e.g. un taux d'utilisation des RB lorsque la partie radio-mobile du réseau implémente un protocole 4G ou 5G selon le 3GPP) ;
- un nombre de ressources radio effectivement utilisées parmi les ressources radio affectées à une station de base donnée ; et
- un nombre de ressources virtualisées affectées à une station de base donnée dans le module 100vran.

Dans d'autres modes de réalisation, le module 110 reçoit le ou les indicateur(s) performances radio-mobile transmis uniquement par les stations de base 100du (ou au moins une d'entre elles), e.g. lorsque le réseau considéré n'implémente pas de ressources virtualisées dédiées à la partie radio-mobile.

A contrario, dans d'autres modes de réalisation le module 110 reçoit le ou les indicateur(s) performances radio-mobile transmis uniquement par le module 100vran (ou éventuellement plusieurs modules 100vran lorsque plusieurs modules de ce type sont instanciés dans le réseau).

Selon le mode de réalisation de la [fig. 2], lors d'une étape E211, à partir du ou des indicateur(s) performances radio-mobile reçu(s) lors de l'étape E210, le module 110 estime :
- les besoins en ressources optiques de la partie radio-mobile du réseau délivrant une information représentative des besoins en ressources optiques, dite « information besoins optiques radio-mobile » (Par exemple, l'information besoins optiques radio-mobile correspond à un débit minimum alloué au ressources optiques 100fr) ;
- les besoins en ressources virtualisées de la partie radio-mobile du réseau délivrant une information représentative des besoins en ressources virtualisées, dite « information besoins virtualisés radio-mobile » (Par exemple l'information besoins virtualisés radio-mobile correspond à un besoin en capacité de calcul, en capacité de stockage ou en capacité de mémoire vive) ; et
- les besoins en ressources radio de la partie radio-mobile du réseau délivrant une information représentative des besoins en ressources radio, dite « information besoins radio » (Par exemple l'information besoins radio correspond à un profil utilisateur radio).

Ainsi, le module 120 de gestion centralisée des ressources radio-mobiles du réseau décide des ressources optiques, virtualisées et radio, afin d'optimiser les performances de la partie radio-mobile du réseau.

Par exemple, à partir du ou des indicateur(s) performances radio-mobile le module 110 sélectionne un profil utilisateur radio (e.g. la bande passante radio de 1,4 MHz, 3 MHz, 5 MHz, 10 MHz, 15 MHz ou 20 MHz pour une station de base donnée lorsque la partie radio-mobile du réseau implémente un protocole 4G ou 5G selon le 3GPP) plus adapté aux besoins remontés par les indicateurs en question (e.g. si l'ensemble des RB affectés à une station de base donné sont utilisé, le module 100 estime qu'il faut affecter une bande passante supérieure à la station de base en question), ainsi qu'un profil virtualisé associé devant être utilisé par le module 100vran. Sur cette base de profil utilisateur radio, le module 110 estime les ressources optiques et les ressources virtualisées nécessaires au bon fonctionnement de la partie radio-mobile du réseau mettant en oeuvre le profil utilisateur radio sélectionné (par exemple, le module 110 que les fonctions virtualisées permettront de garantir une latence de réseau telle que spécifiée dans le standard 3GPP considéré).

Dans d'autres modes de réalisation, le module 110 n'estime que certains besoins parmi les besoins précités en ressources radio, ressources optiques et ressources virtualisées. Par exemple, les ressources radio peuvent être prédéfinies et le module 110 n'a la possibilité d'agir que sur les ressources optiques et, éventuellement, les ressources virtualisées. Ainsi, selon les implémentations considérées, le module 110 peut estimer tout ou partie des besoins en ressources radio et ressources virtualisées en plus des besoins en ressources optiques.

De retour à la figure 2, lors d'une étape E212, le module 110 transmet au module 120 l'information besoins optiques radio-mobile pour gestion des ressources optiques du réseau.

De même, lors d'une étape E213, le module 110 transmet au module 130 l'information besoins virtualisés radio-mobile pour gestion des ressources virtualisées du réseau.

Enfin, lors d'une étape E214, le module 110 transmet au module 100vran et/ou à au moins une station de base 100du, l'information besoins radio pour gestion des ressources radio du réseau, e.g. pour mise à jour du profil radio utilisateur (e.g. bande passante radio affectée, etc.) associée à la ou les stations de base 100du en question.

Dans les modes de réalisation précités dans lesquels le module 110 n'estime qu'une partie des besoins en ressources radio et ressources virtualisées en plus des besoins en ressources optiques, seules les étapes de transmission E212 ou E313 ou E214 correspondantes sont mises en oeuvre.

De retour à la figure 2, on présente maintenant les étapes du procédé de gestion mises en oeuvre par le module 120 de gestion centralisée des ressources optiques et accès-fixe.

Lors d'une étape E220, le module 120 reçoit le ou les indicateur(s) performances accès-fixe transmis par au moins un module appartenant au groupe comprenant :
- un routeur optique 100r ;
- un des modems optiques accès-fixe 100mf ;
- un des modems optiques radio-mobile 100mm ; et
- le module 100vcpe.

Par exemple, un tel indicateur performances accès-fixe correspond à un taux d'utilisation des ressources optiques allouées à la partie accès-fixe du réseau, ou à une charge de calcul des ressources virtualisées allouées à la partie accès-fixe du réseau.

Lors de l'étape E212, le module 120 reçoit l'information besoins optiques radio-mobile transmise par le module 110.

Lors d'une étape E221, le module 120 réalloue les ressources optiques entre, d'une part, le routeur optique 100r et les modems optiques accès-fixe 100mf et, d'autre part, le routeur optique 100r et les modems optiques radio-mobile 100mm en fonction du ou des indicateur(s) performances accès-fixe et de l'information besoins optiques radio-mobile. Au moins une information représentative de la réallocation de ressources optiques, dite « information de réallocation accès-fixe et radio-mobile », est ainsi délivrée par le module 120. Par exemple une première et une deuxième information plus particulièrement représentative des ressources optiques devant être allouées respectivement à la partie radio-mobile et à la partie accès-fixe du réseau sont ainsi délivrées.

De la sorte, le module 120 optimise conjointement les ressources optiques dédiées à la partie accès-fixe et à la partie radio-mobile afin d'optimiser les performances du réseau. Par exemple, le module 120 tient compte du fait que certaines performances des utilisateurs mobiles doivent être garanties alors que les utilisateurs fixes sont servis au mieux. Dans des variantes, afin d'optimiser la QoS des utilisateurs connectés à la partie accès-fixe du réseau, le module 120 met en oeuvre une méthode telle que décrite dans l'article de conférence de N. E. Frigui, T. Lemlouma, S. Gosselin, B. Radier, R. Le Meur, et al. : « Optimization of the Upstream Bandwidth Allocation in Passive Optical Networks Using Internet Users' Behavior Forecast », ONDM 2018 - 22nd International Conférence on Optical Network Design and Modeling, May 2018, Dublin, lreland.

Ainsi, lors d'une étape E222, le module 120 transmet l'au moins une information de réallocation accès-fixe et radio-mobile (par exemple les première et deuxième informations précitées) au routeur 100r pour réallocation des ressources optiques entre, d'une part, le routeur 100r et les modems optiques accès-fixe 100mf et, d'autre part, le routeur 100r et les modems optiques mobiles 100mm (Par exemple, le routeur 100r transmet, d'une part, la première information précitée aux modems optiques mobiles 100mm lors d'une étape E222m et, d'autre part, la deuxième information précitée aux modems optiques accès-fixe 100mf lors d'une étape E222f). Dans des variantes, afin d'optimiser la réallocation des ressources optiques, le routeur 100r met en oeuvre une méthode telle que décrite dans l'article de conférence de N. E. Frigui, T. Lemlouma, S. Gosselin, B. Radier, R. Le Meur and J. Bonnin, « Dynamic reallocation of SLA parameters in passive optical network based on clustering analysis, » 2018 21st Conférence on Innovation in Clouds, Internet and Networks and Workshops (ICIN), Paris, 2018, pp. 1-8.

Par ailleurs, lors de l'étape E221, le module 120 peut estimer également l'information besoins virtualisés accès-fixe (e.g. un besoin en capacité de calcul, en capacité de stockage ou en capacité de mémoire vive pour la partie accès-fixe du réseau) en fonction du ou des indicateur(s) performances accès-fixe. Dans ce cas, lors d'une étape E223, le module 120 transmet l'information besoins virtualisés accès-fixe au module 130 pour gestion des ressources virtualisées du réseau.

Dans d'autres modes de réalisation, le module 120 peut, lors de l'étape E221 ne pas également estimer l'information besoins virtualisés accès-fixe. Dans ce cas, l'étape de transmission E223 n'est pas mise en oeuvre.

De retour à la figure 2, on présente maintenant les étapes du procédé de gestion mises en oeuvre par le module 130 de gestion centralisée des ressources virtualisées déportées dans le réseau.

Lors de l'étape E213, le module 130 reçoit avantageusement l'information besoins virtualisés radio-mobile transmise par le module 110. De même, lors de l'étape E223, le module 130 reçoit avantageusement l'information besoins virtualisés accès-fixe transmise par le module 120.

Ainsi, lors d'une étape E230, le module 130 réalloue les ressources virtualisées en fonction de l'information besoins virtualisés radio-mobile et de l'information besoins virtualisés accès-fixe.

Par exemple, le module 130 affecte des ressources (e.g. une capacité de calcul, une capacité de stockage ou une capacité de mémoire vive) dédiées soit à la partie accès-fixe, soit à la partie radio-mobile, afin d'implémenter les fonctions virtualisées requises par les parties en question (e.g. les fonctions implémentées dans les modules 100vran ou 100vcpe).

Dans d'autres modes de réalisation, les étapes E213 et E223 ne sont pas mises en oeuvre par les modules 110 et 120 respectivement. Dans ce cas, le module 130 ne met pas en oeuvre l'étape E230.

Dans certains modes de réalisation, les étapes précitées du procédé de gestion (selon l'un quelconque des modes de réalisation précités) sont mises en oeuvre périodiquement afin par exemple d'adapter les ressources du réseau à l'évolution des besoins des utilisateurs finaux au fil du temps.

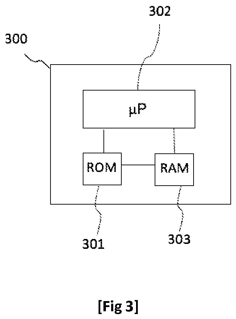

On présente désormais, en relation avec la **figure** 3, un exemple de structure de dispositif 300 permettant de mettre en oeuvre les étapes du procédé de gestion de la figure 2 selon un mode de réalisation de l'invention.

Le dispositif 300 comprend une mémoire vive 303 (par exemple une mémoire RAM), une unité de traitement 302 équipée par exemple d'un processeur, et pilotée par un programme d'ordinateur stocké dans une mémoire morte 301 (par exemple une mémoire ROM ou un disque dur). A l'initialisation, les instructions de code du programme d'ordinateur sont par exemple chargées dans la mémoire vive 303 avant d'être exécutées par le processeur de l'unité de traitement 302.

Cette figure 3 illustre seulement une manière particulière, parmi plusieurs possibles, de réaliser le dispositif 300 afin qu'il effectue certaines étapes du procédé de gestion selon l'invention (selon l'un quelconque des modes de réalisation et/ou variantes décrit(e)s ci-dessus en relation avec la [fig. 2]). En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où le dispositif 300 est réalisé avec une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

Dans certains modes de réalisation, le dispositif 300 implémente l'un quelconque des modules de gestion 110, 120 ou 130. Dans d'autres modes de réalisation, le dispositif 300 implémente plusieurs ou la totalité des modules de gestion 110, 120 ou 130. Enfin, dans certains modes de réalisation, le dispositif 300 est inclus dans un noeud de réseau, e.g. dans le noeud 150.

## Revendications

1. Procédé de gestion de ressources d'un réseau de télécommunications convergent accès-fixe et radio-mobile, au moins une partie desdites ressources étant implémentées sous une forme virtualisée et déportée dans ledit réseau, des ressources optiques dudit réseau étant allouées entre au moins un routeur optique (100r) et une pluralité de modems optiques (100mf,100mm) dudit réseau,
**caractérisé en ce qu'**un module de gestion centralisée des ressources radio-mobiles (110) dudit réseau effectue :
- une réception (E210) d'au moins un indicateur de performances de ladite partie radio-mobile dudit réseau, dit indicateur performances radio-mobile, transmis par au moins une station de base (100du) dudit réseau connectée à un desdits modems optiques et/ou par un module de fonctions radio virtualisées (100vran) déportées dans ledit réseau et dédiées à ladite partie radio-mobile dudit réseau ;
- une estimation (E211) de besoins en ressources optiques de ladite partie radio-mobile dudit réseau à partir au moins dudit au moins un indicateur performances radio-mobile délivrant une information représentative desdits besoins en ressources optiques, dite information besoins optiques radio-mobile ; et
- une transmission (E212) de ladite information besoins optiques radio-mobile à un module de gestion centralisé des ressources optiques et accès-fixes (120) dudit réseau pour gestion desdites ressources optiques dudit réseau.

2. Procédé selon la revendication 1, dans lequel ledit module de gestion centralisée des ressources radio-mobiles (110) effectue en outre :
- une estimation (E211) de besoins en ressources virtualisées de ladite partie radio-mobile dudit réseau à partir au moins dudit au moins un indicateur performances radio-mobile délivrant une information représentative desdits besoins en ressources virtualisées, dite information besoins virtualisés radio-mobile ; et
- une transmission (E213) de ladite information besoins virtualisés radio-mobile à un module (130) de gestion centralisée des ressources virtualisées déportées dans ledit réseau, pour gestion des ressources virtualisées dudit réseau.

3. Procédé selon l'une des revendications 1 ou 2, dans lequel ledit module de gestion centralisée de ressources radio-mobiles (110) effectue en outre :
- une estimation (E211) de besoins en ressources radio de ladite partie radio-mobile dudit réseau à partir au moins de ladite information performances radio-mobile délivrant une information représentative desdits besoins en ressources radio, dite information besoins radio ; et
- une transmission (E214) de ladite information besoins radio à ladite au moins une station de base du réseau et/ou audit module de fonctions radio virtualisées déportées dans ledit réseau et dédiées à ladite partie radio-mobile dudit réseau, pour gestion des ressources radio dudit réseau.

4. Procédé selon l'une quelconque des revendication 1 à 3, dans lequel ledit au moins un indicateur performances radio-mobile appartient au groupe comprenant :
- un taux d'utilisation des ressources radio sur l'interface air de ladite partie radio-mobile dudit réseau ;
- un nombre de ressources radio effectivement utilisées parmi les ressources radio affectées à une station de base donnée ; et
- un nombre de ressources virtualisées affectées à une station de base donnée dans ledit module de fonctions radio virtualisées.

5. Procédé de gestion de ressources d'un réseau de télécommunications convergent accès-fixe et radio-mobile, au moins une partie desdites ressources étant implémentées sous une forme virtualisée et déportée dans ledit réseau, des ressources optiques dudit réseau étant allouées entre au moins un routeur optique (100r) et une pluralité de modems optiques dudit réseau, ladite pluralité de modems optiques comprenant :
- au moins un modem optique dit accès-fixe (100mf), au moins un équipement utilisateur fixe (100cpe) étant connecté à une partie accès-fixe dudit réseau via ledit modem optique accès-fixe ; et
- au moins un modem optique dit radio-mobile (100mm), au moins une station de base (100du) étant connectée à une partie radio-mobile dudit réseau via ledit au moins un modem optique radio-mobile,
**caractérisé en ce qu'**un module de gestion centralisée des ressources optiques et accès-fixe (120) dudit réseau effectue les étapes suivantes :
- une réception (E220) d'au moins un indicateur de performances de ladite partie accès-fixe dudit réseau, dit indicateur performances accès-fixe, transmis par au moins un module appartenant au groupe comprenant :
- ledit au moins un routeur optique ;
- ledit au moins un modem optique accès-fixe ;
- ledit au moins un modem optique radio-mobile ; et
- au moins un module de fonctions équipement fixe virtualisées (100vcpe),
- une réception (E212) d'une information représentative de besoins en ressources optiques de ladite partie mobile dudit réseau, dite information besoins optiques radio-mobile, transmise par un module de gestion centralisée des ressources radio-mobiles (110) dudit réseau ;
- une réallocation (E221) desdites ressources optiques entre, d'une part, ledit au moins un routeur optique et ledit au moins un modem optique accès-fixe et, d'autre part, ledit au moins un routeur optique et ledit au moins un modem optique radio-mobile en fonction dudit au moins un indicateur performances accès-fixe et de ladite information besoins optiques radio-mobile, délivrant au moins une information représentative de ladite réallocation de ressources optiques, dite information de réallocation accès-fixe et radio-mobile.

6. Procédé selon la revendication 5, dans lequel ledit module de gestion centralisée des ressources optiques et accès-fixe (120) effectue en outre :
- une transmission (E222) de ladite au moins une information de réallocation accès-fixe et radio-mobile audit au moins un routeur optique pour réallocation desdites ressources optiques entre, d'une part, ledit au moins un routeur optique et ledit au moins un modem optique accès-fixe et, d'autre part, ledit au moins un routeur optique et ledit au moins un modem optique mobile.

7. Procédé selon l'une des revendications 5 ou 6, dans lequel ledit module de gestion centralisée des ressources optiques et accès-fixe (120) effectue en outre :
- une estimation (E221) de besoins en ressources virtualisées de ladite partie accès-fixe dudit réseau à partir au moins dudit au moins un indicateur performances accès-fixe, délivrant une information représentative desdits besoins en ressources virtualisées, dite information besoins virtualisés accès-fixe ; et
- une transmission (E223) de ladite information besoins virtualisés accès-fixe à un module de gestion centralisée des ressources virtualisées (130) déportées dans ledit réseau, pour gestion des ressources virtualisées dudit réseau.

8. Procédé de gestion de ressources d'un réseau de télécommunications convergent accès-fixe et radio-mobile, au moins une partie desdites ressources étant implémentées sous une forme virtualisée et déportée dans ledit réseau, des ressources optiques dudit réseau étant allouées entre au moins un routeur optique (100r) et une pluralité de modems optiques (100mf,100mm) dudit réseau,
**caractérisé en ce qu'**un module (130) de gestion centralisée des ressources virtualisées déportées dans ledit réseau effectue les étapes suivantes :
- une réception (E213) d'une information représentative de besoins en ressources virtualisées de ladite partie radio-mobile dudit réseau, dite information besoins virtualisés radio-mobile, transmise par un module de gestion centralisée des ressources radio-mobiles (110) dudit réseau ;
- une réception (E223) d'une information représentative de besoins en ressources virtualisées de ladite partie accès-fixe dudit réseau, dite information besoins virtualisés accès-fixe, transmise par un module de gestion centralisée des ressources optiques et accès-fixe (120) dudit réseau ; et
- une réallocation (E230) desdites ressources virtualisées en fonction de ladite information besoins virtualisés radio-mobile et de ladite information besoins virtualisés accès-fixe.

9. Procédé selon l'une quelconque des revendications 1 à 8, dans lequel lesdites ressources optiques sont implémentées selon une infrastructure dite « Fibre jusqu'à la maison ».

10. Produit programme d'ordinateur comprenant des instructions de code de programme pour la mise en oeuvre du procédé selon l'une quelconque des revendications 1 à 9, lorsque ledit programme est exécuté sur un ordinateur.

11. Dispositif de gestion centralisée des ressources radio-mobiles (110) d'un réseau de télécommunications convergent accès-fixe et radio-mobile, au moins une partie desdites ressources étant implémentées sous une forme virtualisée et déportée dans ledit réseau, des ressources optiques dudit réseau étant allouées entre au moins un routeur optique (100r) et une pluralité de modems optiques (100mf,100mm) dudit réseau
ledit dispositif comprenant une machine de calcul reprogrammable (302) ou une machine de calcul dédiée, configurée pour :
- recevoir au moins un indicateur de performances de ladite partie radio-mobile dudit réseau, dit indicateur performances radio-mobile, transmis par au moins une station de base (100du) dudit réseau connectée à un desdits modems optiques et/ou par un module de fonctions radio virtualisées (100vran) déportées dans ledit réseau et dédiées à ladite partie radio-mobile dudit réseau ;
- estimer des besoins en ressources optiques de ladite partie radio-mobile dudit réseau à partir au moins dudit au moins un indicateur performances radio-mobile délivrant une information représentative desdits besoins en ressources optiques, dite information besoins optiques radio-mobile ; et
- transmettre ladite information besoins optiques radio-mobile à un module de gestion centralisé des ressources optiques et accès-fixes (120) dudit réseau pour gestion desdites ressources optiques dudit réseau.

12. Dispositif de gestion centralisée des ressources optiques et accès-fixe (120) d'un réseau de télécommunications convergent accès-fixe et radio-mobile, au moins une partie desdites ressources étant implémentées sous une forme virtualisée et déportée dans ledit réseau, des ressources optiques dudit réseau étant allouées entre au moins un routeur optique (100r) et une pluralité de modems optiques dudit réseau, ladite pluralité de modems optiques comprenant :
- au moins un modem optique dit accès-fixe (100mf), au moins un équipement utilisateur fixe étant connecté à une partie accès-fixe dudit réseau via ledit modem optique accès-fixe ; et
- au moins un modem optique dit radio-mobile (100mm), au moins une station de base (100du) étant connectée à une partie radio-mobile dudit réseau via ledit au moins un modem optique radio-mobile,
ledit dispositif comprenant une machine de calcul reprogrammable (302) ou une machine de calcul dédiée, configurée pour :
- recevoir au moins un indicateur de performances de ladite partie accès-fixe dudit réseau, dit indicateur performances accès-fixe, transmis par au moins un module appartenant au groupe comprenant :
- ledit au moins un routeur optique ;
- ledit au moins un modem optique accès-fixe ;
- ledit au moins un modem optique radio-mobile ; et
- au moins un module de fonctions équipement fixe virtualisées (100vcpe),
- recevoir une information représentative de besoins en ressources optiques de ladite partie mobile dudit réseau, dite information besoins optiques radio-mobile, transmise par un module de gestion centralisée des ressources radio-mobiles (110) dudit réseau ;
- réallouer lesdites ressources optiques entre, d'une part, ledit au moins un routeur optique et ledit au moins un modem optique accès-fixe et, d'autre part, ledit au moins un routeur optique et ledit au moins un modem optique radio-mobile en fonction dudit au moins un indicateur performances accès-fixe et de ladite information besoins optiques radio-mobile, délivrant au moins une information représentative de ladite réallocation de ressources optiques, dite information de réallocation accès-fixe et radio-mobile.

13. Dispositif (130) de gestion centralisée des ressources virtualisées déportées dans un réseau de télécommunications convergent accès-fixe et radio-mobile, au moins une partie desdites ressources étant implémentées sous une forme virtualisée et déportée dans ledit réseau, des ressources optiques dudit réseau étant allouées entre au moins un routeur optique (100r) et une pluralité de modems optiques (100mf,100mm) dudit réseau,
ledit dispositif comprenant une machine de calcul reprogrammable (302) ou une machine de calcul dédiée, configurée pour :
- recevoir une information représentative de besoins en ressources virtualisées de ladite partie radio-mobile dudit réseau, dite information besoins virtualisés radio-mobile, transmise par un module de gestion centralisée des ressources radio-mobiles (110) dudit réseau ;
- recevoir une information représentative de besoins en ressources virtualisées de ladite partie accès-fixe dudit réseau, dite information besoins virtualisés accès-fixe, transmise par un module de gestion centralisée des ressources optiques et accès-fixe (120) dudit réseau ; et
- réallouer lesdites ressources virtualisées en fonction de ladite information besoins virtualisés radio-mobile et de ladite information besoins virtualisés accès-fixe.

14. Noeud (150) de réseau de télécommunications convergent accès-fixe et radio-mobile **caractérisé en ce qu'**il comprend au moins un dispositif selon l'une quelconque des revendications 11 à 13.

## Patentansprüche

1. Verfahren zur Verwaltung von Ressourcen eines konvergenten Festnetz- und Mobilfunk-Telekommunikationsnetzes, wobei mindestens ein Teil der Ressourcen in einer virtualisierten und abgesetzten Form in dem Netz implementiert ist, wobei optische Ressourcen des Netzes zwischen mindestens einem optischen Router (100r) und einer Vielzahl von optischen Modems (100mf,100mm) des Netzes zugewiesen sind,
**dadurch gekennzeichnet, dass** ein Modul zur zentralisierten Verwaltung der Mobilfunkressourcen (110) des Netzes ausführt:
- ein Empfangen (E210) mindestens eines Leistungsindikators des Mobilfunkteils des Netzes, Mobilfunk-Leistungsindikator genannt, der von mindestens einer Basisstation (100du) des Netzes, die an eines der optischen Modems angeschlossen ist, und/oder von einem Modul für virtualisierte Funkfunktionen (100vran), die in dem Netz abgesetzt sind und für den Mobilfunkteil des Netzes dediziert sind, übertragen wird,
- ein Schätzen (E211) von Bedarfen an optischen Ressourcen des Mobilfunkteils des Netzes ausgehend mindestens von dem mindestens einen Mobilfunk-Leistungsindikator, bereitstellend eine Information, die für die Bedarfe an optischen Ressourcen repräsentativ ist, Information zu optischen Mobilfunkbedarfen genannt; und
- ein Übertragen (E212) der Information zu optischen Mobilfunkbedarfen an ein Modul zur zentralisierten Verwaltung der optischen und Festnetzressourcen (120) des Netzes zur Verwaltung der optischen Ressourcen des Netzes.

2. Verfahren nach Anspruch 1, wobei das Modul zur zentralisierten Verwaltung der Mobilfunkressourcen (110) ferner ausführt:
- ein Schätzen (E211) von Bedarfen an virtualisierten Ressourcen des Mobilfunkteils des Netzes ausgehend mindestens von dem mindestens einen Mobilfunk-Leistungsindikator, bereitstellend eine Information, die für die Bedarfe an virtualisierten Ressourcen repräsentativ ist, Information zu virtualisierten Mobilfunkbedarfen genannt; und
- ein Übertragen (E213) der Information zu virtualisierten Mobilfunkbedarfen an ein Modul (130) zur zentralisierten Verwaltung der virtualisierten Ressourcen, die in dem Netz abgesetzt sind, zur Verwaltung der virtualisierten Ressourcen des Netzes.

3. Verfahren nach einem der Ansprüche 1 oder 2, wobei das Modul zur zentralisierten Verwaltung von Mobilfunkressourcen (110) ferner ausführt:
- ein Schätzen (E211) von Bedarfen an Funkressourcen des Mobilfunkteils des Netzes ausgehend mindestens von der Mobilfunk-Leistungsinformation, bereitstellend eine Information, die für die Bedarfe an Funkressourcen repräsentativ ist, Funkbedarfe-Information genannt; und
- ein Übertragen (E214) der Funkbedarfe-Information an die mindestens eine Basisstation des Netzes und/oder an das Modul für virtualisierte Funkfunktionen, die in dem Netz abgesetzt sind und für den Mobilfunkteil des Netzes dediziert sind, zur Verwaltung der Funkressourcen des Netzes.

4. Verfahren nach einem der Ansprüche 1 bis 3, wobei der mindestens eine Mobilfunk-Leistungsindikator der Gruppe angehört, die umfasst:
- eine Nutzungsquote der Funkressourcen über die Luftschnittstelle des Mobilfunkteils des Netzes;
- eine Anzahl von tatsächlich genutzten Funkressourcen unter den Funkressourcen, die einer gegebenen Basisstation zugeordnet sind; und
- einer Anzahl von virtualisierten Ressourcen, die einer gegebenen Basisstation in dem Modul für virtualisierte Funkressourcen zugeordnet sind.

5. Verfahren zur Verwaltung von Ressourcen eines konvergenten Festnetz- und Mobilfunk-Telekommunikationsnetzes, wobei mindestens ein Teil der Ressourcen in einer virtualisierten und abgesetzten Form in dem Netz implementiert ist, wobei optische Ressourcen des Netzes zwischen mindestens einem optischen Router (100r) und einer Vielzahl von optischen Modems des Netzes zugewiesen sind, wobei die Vielzahl von optischen Modems umfasst:
- mindestens ein sogenanntes optisches Festnetzmodem (100mf), wobei mindestens eine ortsfeste Benutzereinrichtung (100cpe) an einen Festnetzteil des Netzes über das optische Festnetzmodem angeschlossen ist; und
- mindestens ein sogenanntes optisches Mobilfunkmodem (100mm), wobei mindestens eine Basisstation (100du) an einen Mobilfunkteil des Netzes über das mindestens eine optische Mobilfunkmodem angeschlossen ist,
**dadurch gekennzeichnet, dass** ein Modul zur zentralisierten Verwaltung der optischen und Festnetzressourcen (120) des Netzes die folgenden Schritte ausführt:
- ein Empfangen (E220) mindestens eines Leistungsindikators des Festnetzteils des Netzes, Festnetz-Leistungsindikator genannt, der von mindestens einem Modul übertragen wird, das der Gruppe angehört, die umfasst:
- den mindestens einen optischen Router;
- das mindestens eine optische Festnetzmodem;
- das mindestens eine optische Mobilfunkmodem; und
- mindestens ein Modul für virtualisierte Funktionen einer ortsfesten Einrichtung (100vcpe),
- ein Empfangen (E212) einer Information, die für Bedarfe an optischen Ressourcen des mobilen Teils des Netzes repräsentativ ist, Information zu optischen Mobilfunkbedarfen genannt, die von einem Modul zur zentralisierten Verwaltung der Mobilfunkressourcen (110) des Netzes übertragen wird;
- eine Neuzuweisung (E221) der optischen Ressourcen zwischen, zum einen, dem mindestens einen optischen Router und dem mindestens einen optischen Festnetzmodem und, zum anderen, dem mindestens einen optischen Router und dem mindestens einen optischen Mobilfunkmodem in Abhängigkeit von dem mindestens einen Festnetz-Leistungsindikator und der Information zu optischen Mobilfunkbedarfen, bereitstellend mindestens eine Information, die für die Neuzuweisung von optischen Ressourcen repräsentativ ist, Information zur Festnetz- und Mobilfunkneuzuweisung genannt.

6. Verfahren nach Anspruch 5, wobei das Modul zur zentralisierten Verwaltung der optischen und Festnetzressourcen (120) ferner ausführt:
- ein Übertragen (E222) der mindestens einen Information zur Festnetz- und Mobilfunkneuzuweisung an den mindestens einen optischen Router zur Neuzuweisung der optischen Ressourcen zwischen, zum einen, dem mindestens einen optischen Router und dem mindestens einen optischen Festnetzmodem und, zum anderen, dem mindestens einen optischen Router und dem mindestens einem optischen mobilen Modem.

7. Verfahren nach einem der Ansprüche 5 oder 6, wobei das Modul zur zentralisierten Verwaltung der optischen und Festnetzressourcen (120) ferner ausführt:
- ein Schätzen (E221) von Bedarfen an virtualisierten Ressourcen des Festnetzteils des Netzes ausgehend mindestens von dem mindestens einen Festnetz-Leistungsindikator, bereitstellend eine Information, die für die Bedarfe an virtualisierten Ressourcen repräsentativ ist, Information zu virtualisierten Festnetzbedarfen genannt; und
- ein Übertragen (E223) der Information zu virtualisierten Festnetzbedarfen an ein Modul zur zentralisierten Verwaltung der virtualisierten Ressourcen (130), die in dem Netz abgesetzt sind, zur Verwaltung der virtualisierten Ressourcen des Netzes.

8. Verfahren zur Verwaltung von Ressourcen eines konvergenten Festnetz- und Mobilfunk-Telekommunikationsnetzes, wobei mindestens ein Teil der Ressourcen in einer virtualisierten und abgesetzten Form in dem Netz implementiert ist, wobei optische Ressourcen des Netzes zwischen mindestens einem optischen Router (100r) und einer Vielzahl von optischen Modems (100mf,100mm) des Netzes zugewiesen sind,
**dadurch gekennzeichnet, dass** ein Modul (130) zur zentralisierten Verwaltung der virtualisierten Ressourcen, die in dem Netz abgesetzt sind, die folgenden Schritte ausführt:
- ein Empfangen (E213) einer Information, die für Bedarfe an virtualisierten Ressourcen des Mobilfunkteils des Netzes repräsentativ ist, Information zu virtualisierten Mobilfunkbedarfen genannt, die von einem Modul zur zentralisierten Verwaltung der Mobilfunkressourcen (110) des Netzes übertragen wird;
- ein Empfangen (E223) einer Information, die für Bedarfe an virtualisierten Ressourcen des Festnetzteils des Netzes repräsentativ ist, Information zu virtualisierten Festnetzbedarfen genannt, die von einem Modul zur zentralisierten Verwaltung der optischen und Festnetzressourcen (120) des Netzes übertragen wird; und
- eine Neuzuweisung (E230) der virtualisierten Ressourcen in Abhängigkeit von der Information zu virtualisierten Mobilfunkbedarfen und der Information zu virtualisierten Festnetzbedarfen.

9. Verfahren nach einem der Ansprüche 1 bis 8, wobei die optischen Ressourcen gemäß einer "Fiber to the home" genannten Infrastruktur implementiert sind.

10. Computerprogrammprodukt, das Programmcodeanweisungen umfasst, die bei der Ausführung des Programms auf einem Computer das Verfahren nach einem der Ansprüche 1 bis 9 durchführen.

11. Vorrichtung zur zentralisierten Verwaltung der Mobilfunkressourcen (110) eines konvergenten Festnetz- und Mobilfunk-Telekommunikationsnetzes, wobei mindestens ein Teil der Ressourcen in einer virtualisierten und abgesetzten Form in dem Netz implementiert ist, wobei optische Ressourcen des Netzes zwischen mindestens einem optischen Router (100r) und einer Vielzahl von optischen Modems (100mf,100mm) des Netzes zugewiesen sind,
wobei die Vorrichtung eine umprogrammierbare Rechenmaschine (302) oder eine dedizierte Rechenmaschine umfasst, die dazu ausgestaltet ist:
- mindestens einen Leistungsindikator des Mobilfunkteils des Netzes, Mobilfunk-Leistungsindikator genannt, zu empfangen, der von mindestens einer Basisstation (100du) des Netzes, die an eines der optischen Modems angeschlossen ist, und/oder von einem Modul für virtualisierte Funkfunktionen (100vran), die in dem Netz abgesetzt sind und für den Mobilfunkteil des Netzes dediziert sind, übertragen wird,
- Bedarfe an optischen Ressourcen des Mobilfunkteils des Netzes ausgehend mindestens von dem mindestens einen Mobilfunk-Leistungsindikator zu schätzen, bereitstellend eine Information, die für die Bedarfe an optischen Ressourcen repräsentativ ist, Information zu optischen Mobilfunkbedarfen genannt; und
- die Information zu optischen Mobilfunkbedarfen an ein Modul zur zentralisierten Verwaltung der optischen und Festnetzressourcen (120) des Netzes zur Verwaltung der optischen Ressourcen des Netzes zu übertragen.

12. Vorrichtung zur zentralisierten Verwaltung der optischen und Festnetzressourcen (120) eines konvergenten Festnetz- und Mobilfunk-Telekommunikationsnetzes, wobei mindestens ein Teil der Ressourcen in einer virtualisierten und abgesetzten Form in dem Netz implementiert ist, wobei optische Ressourcen des Netzes zwischen mindestens einem optischen Router (100r) und einer Vielzahl von optischen Modems des Netzes zugewiesen sind, wobei die Vielzahl von optischen Modems umfasst:
- mindestens ein sogenanntes optisches Festnetzmodem (100mf), wobei mindestens eine ortsfeste Benutzereinrichtung (100cpe) an einen Festnetzteil des Netzes über das optische Festnetzmodem angeschlossen ist; und
- mindestens ein sogenanntes optisches Mobilfunkmodem (100mm), wobei mindestens eine Basisstation (100du) an einen Mobilfunkteil des Netzes über das mindestens eine optische Mobilfunkmodem angeschlossen ist,
wobei die Vorrichtung eine umprogrammierbare Rechenmaschine (302) oder eine dedizierte Rechenmaschine umfasst, die dazu ausgestaltet ist:
- mindestens einen Leistungsindikator des Festnetzteils des Netzes, Festnetz-Leistungsindikator genannt, zu empfangen, der von mindestens einem Modul übertragen wird, das der Gruppe angehört, die umfasst:
- den mindestens einen optischen Router;
- das mindestens eine optische Festnetzmodem;
- das mindestens eine optische Mobilfunkmodem; und
- mindestens ein Modul für virtualisierte Funktionen einer ortsfesten Einrichtung (100vcpe),
- eine Information zu empfangen, die für Bedarfe an optischen Ressourcen des mobilen Teils des Netzes repräsentativ ist, Information zu optischen Mobilfunkbedarfen genannt, die von einem Modul zur zentralisierten Verwaltung der Mobilfunkressourcen (110) des Netzes übertragen wird;
- die optischen Ressourcen neu zuzuweisen zwischen, zum einen, dem mindestens einen optischen Router und dem mindestens einen optischen Festnetzmodem und, zum anderen, dem mindestens einen optischen Router und dem mindestens einen optischen Mobilfunkmodem in Abhängigkeit von dem mindestens einen Festnetz-Leistungsindikator und der Information zu optischen Mobilfunkbedarfen, bereitstellend mindestens eine Information, die für die Neuzuweisung von optischen Ressourcen repräsentativ ist, Information zur Festnetz- und Mobilfunkneuzuweisung genannt.

13. Vorrichtung (130) zur zentralisierten Verwaltung der abgesetzten virtualisierten Ressourcen in einem konvergenten Festnetz- und Mobilfunk-Telekommunikationsnetz, wobei mindestens ein Teil der Ressourcen in einer virtualisierten und abgesetzten Form in dem Netz implementiert ist, wobei optische Ressourcen des Netzes zwischen mindestens einem optischen Router (100r) und einer Vielzahl von optischen Modems (100mf,100mm) des Netzes zugewiesen sind,
wobei die Vorrichtung eine umprogrammierbare Rechenmaschine (302) oder eine dedizierte Rechenmaschine umfasst, die dazu ausgestaltet ist:
- eine Information zu empfangen, die für Bedarfe an virtualisierten Ressourcen des Mobilfunkteils des Netzes repräsentativ ist, Information zu virtualisierten Mobilfunkbedarfen genannt, die von einem Modul zur zentralisierten Verwaltung der Mobilfunkressourcen (110) des Netzes übertragen wird;
- eine Information zu empfangen, die für Bedarfe an virtualisierten Ressourcen des Festnetzteils des Netzes repräsentativ ist, Information zu virtualisierten Festnetzbedarfen genannt, die von einem Modul zur zentralisierten Verwaltung der optischen und Festnetzressourcen (120) des Netzes übertragen wird; und
- die virtualisierten Ressourcen in Abhängigkeit von der Information zu virtualisierten Mobilfunkbedarfen und der Information zu virtualisierten Festnetzbedarfen neu zuzuweisen.

14. Knoten (150) eines konvergenten Festnetz- und Mobilfunk-Telekommunikationsnetzes, **dadurch gekennzeichnet, dass** er mindestens eine Vorrichtung nach einem der Ansprüche 11 bis 13 umfasst.

## Claims

1. Method for managing resources of a fixed-access and mobile radio convergent telecommunications network, at least some of said resources being implemented in a virtualized and remote form in said network, optical resources of said network being allocated between at least one optical router (100r) and a plurality of optical modems (100mf, 100mm) of said network, **characterized in that** a centralized management module (110) for managing the mobile radio resources of said network:
- receives (E210) at least one performance indicator in relation to said mobile radio part of said network, referred to as mobile radio performance indicator, transmitted by at least one base station (100du) of said network that is connected to one of said optical modems and/or by a virtualized radio functions module (100vran) for virtualized radio functions that are remote in said network and dedicated to said mobile radio part of said network;
- estimates (E211) optical resource requirements of said mobile radio part of said network based at least on said at least one mobile radio performance indicator, delivering information representative of said optical resource requirements, referred to as mobile radio optical requirements information; and
- transmits (E212) said mobile radio optical requirements information to a centralized management module (120) for managing the optical and fixed-access resources of said network in order to manage said optical resources of said network.

2. Method according to Claim 1, wherein said centralized management module (110) for managing the mobile radio resources furthermore:
- estimates (E211) virtualized resource requirements of said mobile radio part of said network based at least on said at least one mobile radio performance indicator, delivering information representative of said virtualized resource requirements, referred to as mobile radio virtualized requirements information; and
- transmits (E213) said mobile radio virtualized requirements information to a centralized management module (130) for managing the virtualized resources remote in said network, in order to manage the virtualized resources of said network.

3. Method according to either of Claims 1 and 2, wherein said centralized management module (110) for managing mobile radio resources furthermore:
- estimates (E211) radio resource requirements of said mobile radio part of said network based at least on said mobile radio performance information, delivering information representative of said radio resource requirements, referred to as radio requirements information; and
- transmits (E214) said radio requirements information to said at least one base station of the network and/or to said virtualized radio functions module for virtualized radio functions remote in said network and dedicated to said mobile radio part of said network, in order to manage the radio resources of said network.

4. Method according to any one of Claims 1 to 3, wherein said at least one mobile radio performance indicator belongs to the group comprising:
- a degree of use of the radio resources on the air interface of said mobile radio part of said network;
- a number of radio resources actually used from among the radio resources assigned to a given base station; and
- a number of virtualized resources assigned to a given base station in said virtualized radio functions module.

5. Method for managing resources of a fixed-access and mobile radio convergent telecommunications network, at least some of said resources being implemented in a virtualized and remote form in said network, optical resources of said network being allocated between at least one optical router (100r) and a plurality of optical modems of said network, said plurality of optical modems comprising:
- at least one what is referred to as fixed-access optical modem (100mf), at least one fixed user equipment (100cpe) being connected to a fixed-access part of said network via said fixed-access optical modem; and
- at least one what is referred to as mobile radio optical modem (100mm), at least one base station (100du) being connected to a mobile radio part of said network via said at least one mobile radio optical modem,
**characterized in that** a centralized management module (120) for managing the optical and fixed-access resources of said network performs the following steps:
- receiving (E220) at least one performance indicator in relation to said fixed-access part of said network, referred to as fixed-access performance indicator, transmitted by at least one module belonging to the group comprising:
- said at least one optical router;
- said at least one fixed-access optical modem;
- said at least one mobile radio optical modem; and
- at least one virtualized fixed equipment functions module (100vcpe),
- receiving (E212) information representative of optical resource requirements of said mobile part of said network, referred to as mobile radio optical requirements information, transmitted by a centralized management module (110) for managing the mobile radio resources of said network;
- reallocating (E221) said optical resources between said at least one optical router and said at least one fixed-access optical modem, on the one hand, and said at least one optical router and said at least one mobile radio optical modem, on the other hand, on the basis of said at least one fixed-access performance indicator and said mobile radio optical requirements information, delivering at least one item of information representative of said reallocation of optical resources, referred to as fixed-access and mobile radio reallocation information.

6. Method according to Claim 5, wherein said centralized management module (120) for managing the optical and fixed-access resources furthermore:
- transmits (E222) said at least one item of fixed-access and mobile radio reallocation information to said at least one optical router in order to reallocate said optical resources between said at least one optical router and said at least one fixed-access optical modem, on the one hand, and said at least one optical router and said at least one mobile optical modem, on the other hand.

7. Method according to either of Claims 5 and 6, wherein said centralized management module (120) for managing the optical and fixed-access resources furthermore:
- estimates (E221) virtualized resource requirements of said fixed-access part of said network based at least on said at least one fixed-access performance indicator, delivering information representative of said virtualized resource requirements, referred to as fixed-access virtualized requirements information; and
- transmits (E223) said fixed-access virtualized requirements information to a centralized management module (130) for managing the virtualized resources remote in said network, in order to manage the virtualized resources of said network.

8. Method for managing resources of a fixed-access and mobile radio convergent telecommunications network, at least some of said resources being implemented in a virtualized and remote form in said network, optical resources of said network being allocated between at least one optical router (100r) and a plurality of optical modems (100mf, 100mm) of said network, **characterized in that** a centralized management module (130) for managing the virtualized resources remote in said network performs the following steps:
- receiving (E213) information representative of virtualized resource requirements of said mobile radio part of said network, referred to as mobile radio virtualized requirements information, transmitted by a centralized management module (110) for managing the mobile radio resources of said network;
- receiving (E223) information representative of virtualized resource requirements of said fixed-access part of said network, referred to as fixed-access virtualized requirements information, transmitted by a centralized management module (120) for managing the optical and fixed-access resources of said network; and
- reallocating (E230) said virtualized resources on the basis of said mobile radio virtualized requirements information and said fixed-access virtualized requirements information.

9. Method according to any one of Claims 1 to 8, wherein said optical resources are implemented in accordance with what is referred to as a "Fibre-to-the-Home" infrastructure.

10. Computer program product comprising program code instructions for implementing the method according to any one of Claims 1 to 9 when said program is executed on a computer.

11. Device (110) for the centralized management of the mobile radio resources of a fixed-access and mobile radio convergent telecommunications network, at least some of said resources being implemented in a virtualized and remote form in said network, optical resources of said network being allocated between at least one optical router (100r) and a plurality of optical modems (100mf, 100mm) of said network,
said device comprising a reprogrammable computing machine (302) or a dedicated computing machine, configured to:
- receive at least one performance indicator in relation to said mobile radio part of said network, referred to as mobile radio performance indicator, transmitted by at least one base station (100du) of said network that is connected to one of said optical modems and/or by a virtualized radio functions module (100vran) for virtualized radio functions that are remote in said network and dedicated to said mobile radio part of said network;
- estimate optical resource requirements of said mobile radio part of said network based at least on said at least one mobile radio performance indicator, delivering information representative of said optical resource requirements, referred to as mobile radio optical requirements information; and
- transmit said mobile radio optical requirements information to a centralized management module (120) for managing the optical and fixed-access resources of said network in order to manage said optical resources of said network.

12. Device (120) for the centralized management of the optical and fixed-access resources of a fixed-access and mobile radio convergent telecommunications network, at least some of said resources being implemented in a virtualized and remote form in said network, optical resources of said network being allocated between at least one optical router (100r) and a plurality of optical modems of said network, said plurality of optical modems comprising:
- at least one what is referred to as fixed-access optical modem (100mf), at least one fixed user equipment being connected to a fixed-access part of said network via said fixed-access optical modem; and
- at least one what is referred to as mobile radio optical modem (100mm), at least one base station (100du) being connected to a mobile radio part of said network via said at least one mobile radio optical modem,
said device comprising a reprogrammable computing machine (302) or a dedicated computing machine, configured to:
- receive at least one performance indicator in relation to said fixed-access part of said network, referred to as fixed-access performance indicator, transmitted by at least one module belonging to the group comprising:
- said at least one optical router;
- said at least one fixed-access optical modem;
- said at least one mobile radio optical modem; and
- at least one virtualized fixed equipment functions module (100vcpe),
- receive information representative of optical resource requirements of said mobile part of said network, referred to as mobile radio optical requirements information, transmitted by a centralized management module (110) for managing the mobile radio resources of said network;
- reallocate said optical resources between said at least one optical router and said at least one fixed-access optical modem, on the one hand, and said at least one optical router and said at least one mobile radio optical modem, on the other hand, on the basis of said at least one fixed-access performance indicator and said mobile radio optical requirements information, delivering at least one item of information representative of said reallocation of optical resources, referred to as fixed-access and mobile radio reallocation information.

13. Device (130) for the centralized management of the remote virtualized resources in a fixed-access and mobile radio convergent telecommunications network, at least some of said resources being implemented in a virtualized and remote form in said network, optical resources of said network being allocated between at least one optical router (100r) and a plurality of optical modems (100mf, 100mm) of said network,
said device comprising a reprogrammable computing machine (302) or a dedicated computing machine, configured to:
- receive information representative of virtualized resource requirements of said mobile radio part of said network, referred to as mobile radio virtualized requirements information, transmitted by a centralized management module (110) for managing the mobile radio resources of said network;
- receive information representative of virtualized resource requirements of said fixed-access part of said network, referred to as fixed-access virtualized requirements information, transmitted by a centralized management module (120) for managing the optical and fixed-access resources of said network; and
- reallocate said virtualized resources on the basis of said mobile radio virtualized requirements information and said fixed-access virtualized requirements information.

14. Fixed-access and mobile radio convergent telecommunications network node (150), **characterized in that** it comprises at least one device according to any one of Claims 11 to 13.
